# EUROPEAN PATENT APPLICATION

(11) **EP 4 730 910 A1**
(43) Date of publication of application: **22.04.2026**
(21) Application number: 23941601.9
(22) Date of filing: 15.06.2023
(51) Int. Cl.: H04W 84/20, H04W 92/18

(54) **WIRELESS COMMUNICATION SYSTEM**

(71) Applicant: MITSUBISHI ELECTRIC CORPORATION, Chiyoda-ku Tokyo 100-8310 (JP)
(72) Inventor: IWAYAMA, Naofumi, Tokyo 100-8310 (JP); HASEGAWA, Fumiki, Tokyo 100-8310 (JP); MAKINO, Shinya, Tokyo 100-8310 (JP); ANDO, Nobuhiko, Tokyo 100-8310 (JP)
(74) Representative: Witte, Weller & Partner Patentanwälte mbB
(86) International application number: PCT/JP2023/022207
(87) International publication number: WO 2024/257297

(57) **Abstract**

A radio communication system (100) includes a plurality of terminals (110A to 110E), a base station (130) configured to perform radio communication with at least one volunteer terminal (110A, 110B) included in the plurality of terminals (110A to 110E), and an application server (150) configured to perform communication with the base station (130). The at least one volunteer terminal (110A, 110B) is configured to acquire a model to be used for machine learning from the application server (150) via the base station (130), and notify other terminals (110A to 110E) of the model. The plurality of terminals (110A to 110E) are configured to construct a peer-to-peer network in response to the notification by using inter-terminal direct communication through sidelink communication to share the model via the peer-to-peer network.

## Description

### Technical Field

The present disclosure relates to a radio communication system.

### Background

The 3rd Generation Partnership Project (3GPP), which is a standardization organization for mobile communication systems, is established for drafting international standard specifications of the third generation of cellular phone systems (3G).

In recent years, several new technologies have been studied in 3GPP. For example, application of artificial intelligence (AI) or machine learning (ML) to physical (PHY) control of a radio access network (RAN) is studied. For example, 3GPP assumes future wide spread of AI and ML also as applications using communication for Release 19 and studies a method of efficiently transferring a machine learning model between an AI/ML application server on the base station side and a terminal that executes AI or ML processing (for example, refer to Patent Literature 1).

### Citation List

### Non Patent Literature

[NPL 1] 3GPP TR 22.876 V0.2.0

### SUMMARY

### Technical Problem

As described in NPL 1, in an application using AI or ML, each user equipment (UE), which is a terminal, needs to download a machine learning model from an application server located on the base station side. Hence, with an increase in the number of UEs being used, problems of tight radio resources between a base station and the UEs and an increase in server load arise.

In NPL 1, to solve the above-described problems, it is attempted that a "volunteer UE" (referred to as a volunteer terminal or a volunteer UE below) downloads a model from an application server, and the volunteer terminal uses sidelink communication to distribute the model to each UE. However, a method for another UE to discover a volunteer terminal is not disclosed. Moreover, a method of selecting a volunteer terminal is not disclosed. Further, there are new issues such as an increase in delay time due to involving a volunteer terminal, an increase in battery consumption by a volunteer terminal due to an increase in load of the volunteer terminal, and a problem in continuation of operation of the entire system in a case where a volunteer terminal moves out from the coverage of a base station or a case of halt due to a failure, for example.

In view of the above, an object of one or a plurality of aspects of the present disclosure is to enable distribution of a model using at least one volunteer terminal to be reliably performed. Solution to Problem

A radio communication system according to one aspect of the present disclosure includes a plurality of terminals, a base station configured to perform radio communication with at least one volunteer terminal included in the plurality of terminals, and a server configured to perform communication with the base station. The at least one volunteer terminal is configured to acquire a model to be used for machine learning from the server via the base station, and notify the plurality of terminals excluding the at least one volunteer terminal of the model. The plurality of terminals are configured to construct a peer-to-peer network in response to the notification by using inter-terminal direct communication through sidelink communication to share the model via the peer-to-peer network.

### Advantageous Effects of Invention

According to one or a plurality of aspects of the present disclosure, it is possible to reliably perform distribution of a model using at least one volunteer terminal.

### BRIEF DESCRIPTION OF THE DRAWINGS

Fig. 1 is a block diagram illustrating a schematic configuration of a radio communication system according to an embodiment;
Fig. 2 is a block diagram illustrating a schematic configuration of a UE;
Figs. 3A and 3B are block diagrams illustrating hardware configuration examples;
Fig. 4 is a block diagram illustrating a schematic configuration of a base station;
Fig. 5 is a block diagram illustrating a schematic configuration of an application server;
Fig. 6 is a first sequence diagram illustrating a model downloading and uploading procedure; and
Fig. 7 is a second sequence diagram illustrating the model downloading and uploading procedure.

### DETAILED DESCRIPTION

### Embodiment.

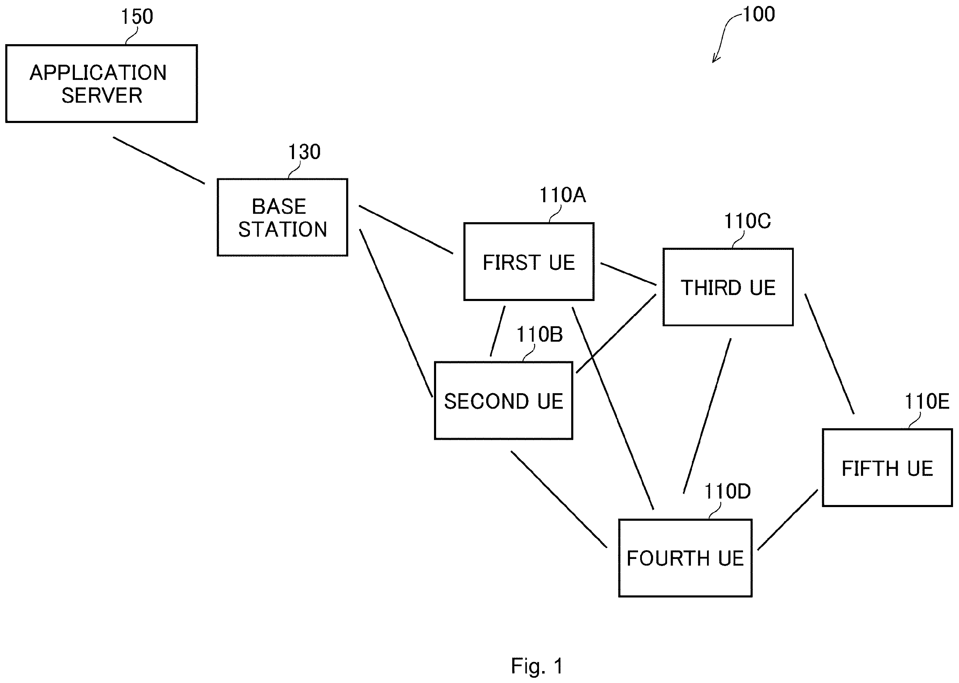

Fig. 1 is a block diagram illustrating a schematic configuration of a radio communication system 100 according to an embodiment. The radio communication system 100 includes a first UE 110A, a second UE 110B, a third UE 110C, a fourth UE 110D, a fifth UE 110E, a base station 130 configured to function as a core network, and an application server 150. Here, unless it is necessary to particularly distinguish the first UE 110A, the second UE 110B, the third UE 110C, the fourth UE 110D, and the fifth UE 110E, each of these is referred to as a UE 110.

Here, the first UE 110A and the second UE 110B each have a function of a volunteer terminal. The third UE 110C and the fourth UE 110D are present in the range of sidelink communication of the first UE 110A and the second UE 110B. Meanwhile the fifth UE 110E is present outside the range of the sidelink communication of the first UE 110A and the second UE 110B. Note that the third UE 110C, the fourth UE 110D, and the fifth UE 110E may be located in an area communicable with the base station 130 or may be outside the area.

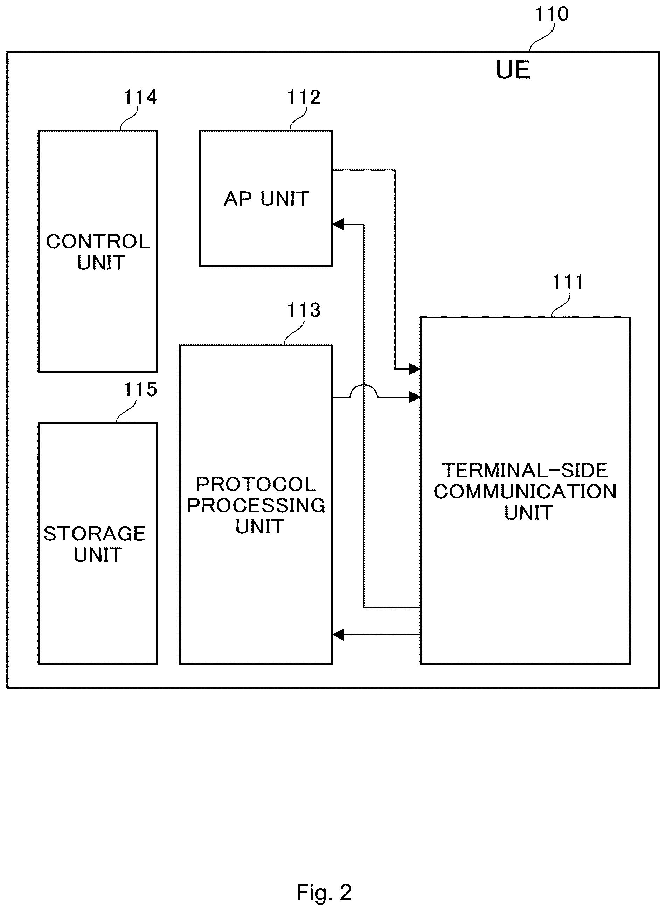

Fig. 2 is a block diagram illustrating a schematic configuration of the UE 110. The UE 110 includes a terminal-side communication unit 111, an application unit (referred to as an AP unit below) 112, a protocol processing unit 113, a control unit 114, and a storage unit 115.

First, transmission processing of the UE 110 will be described. Control data from the protocol processing unit 113 or user data from the AP unit 112 is transmitted to the terminal-side communication unit 111.

The terminal-side communication unit 111 converts the data to a transmission signal for radio communication and transmits the transmission signal to a corresponding destination via one or a plurality of antennas.

Next, reception processing of the UE 110 will be described. The terminal-side communication unit 111 receives a radio signal from a transmission source as a reception signal via one or a plurality of antennas and generates control data or user data from the reception signal. The terminal-side communication unit 111 then transmits the control data to the protocol processing unit 113 and transmits the user data to the AP unit 112.

The series of processing by the UE 110 as described above are controlled by the control unit 114. Although not illustrated, the control unit 114 is connected to the terminal-side communication unit 111, the AP unit 112, and the protocol processing unit 113. Note that the number of antennas used by the UE 110 for transmission and the number of antennas used by the UE 110 for reception may be the same or different from each other.

The storage unit 115 stores a program and data necessary for processing by the UE 110. In the present embodiment, the storage unit 115 stores a model downloaded from the application server 150. Note that, although not illustrated, the storage unit 115 is connected to the control unit 114, the AP unit 112, and the protocol processing unit 113.

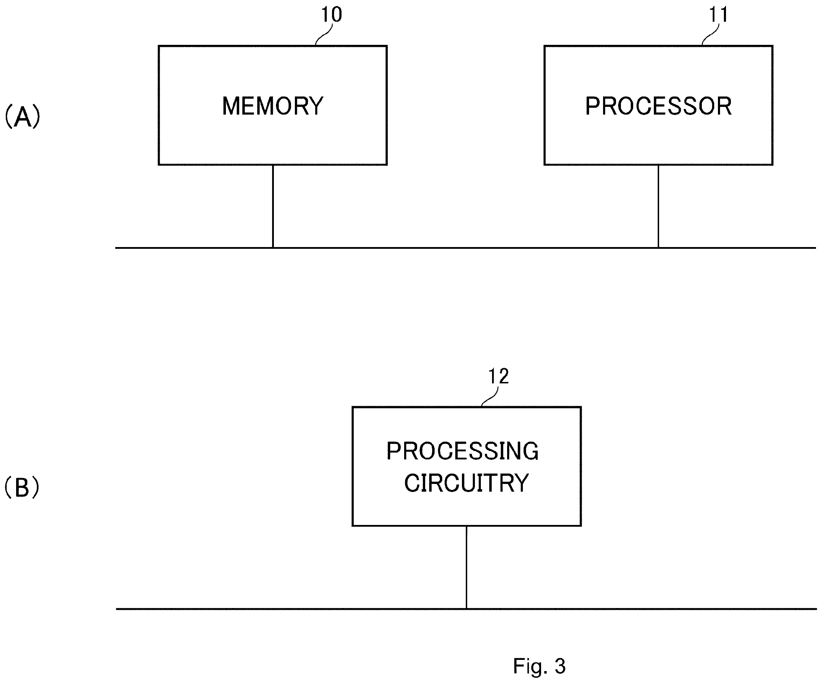

One or some of or all of the AP unit 112, the protocol processing unit 113, and the control unit 114 described above can each be implemented by a memory 10 and a processor 11, such as a central processing unit (CPU), configured to execute a program stored in the memory 10, as illustrated in Fig. 3A, for example. Such a program may be provided via a network or may be provided by being recorded on a recoding medium. In other words, such a program may be provided as a program product, for example.

One or some of or all of the AP unit 112, the protocol processing unit 113, and the control unit 114 can each be implemented by processing circuitry 12 such as a single circuit, a combined circuit, a processor configured to operate according to a program, a parallel processor configured to operate according to a program, an application specific integrated circuit (ASIC), or a field programmable gate array (FPGA), as illustrated in Fig. 3B, for example. As described above, the AP unit 112, the protocol processing unit 113, and the control unit 114 can each be implemented by a processing circuitry network.

Note that the terminal-side communication unit 111 can be implemented by a radio communication interface, which is an interface for radio communication. The storage unit 115 can be implemented by a volatile or non-volatile memory.

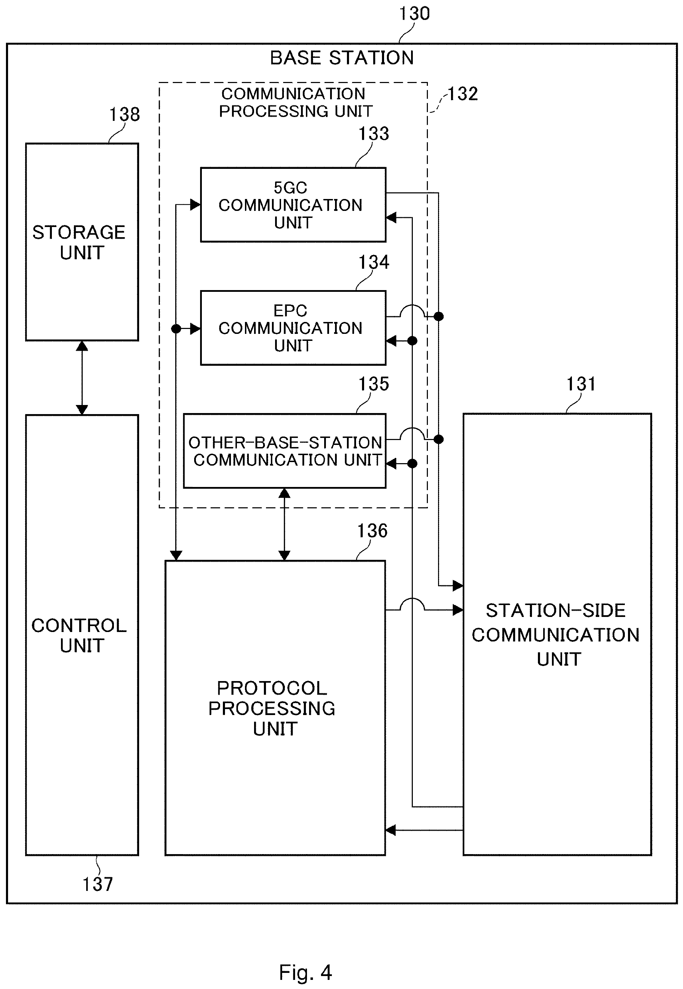

Fig. 4 is a block diagram illustrating a schematic configuration of the base station 130. The base station 130 includes a station-side communication unit 131, a communication processing unit 132, a protocol processing unit 136, a control unit 137, and a storage unit 138.

The communication processing unit 132 includes a 5GC communication unit 133 configured to perform transmission and reception of data with 5GC, an EPC communication unit 134 configured to perform transmission and reception of data with an EPC such as a mobility management entity (MME), and an other-base-station communication unit 135 configured to perform transmission and reception of data with other base stations. Note that each of the 5GC communication unit 133, the EPC communication unit 134, and the other-base-station communication unit 135 transmits and receives information to and from the protocol processing unit 136.

First, transmission processing of the base station 130 will be described. Control data from the protocol processing unit 136, or user data or control data from the 5GC communication unit 133, the EPC communication unit 134 or the other-base-station communication unit 135 is provided to the station-side communication unit 131.

The station-side communication unit 131 converts the data into a transmission signal for radio communication, and transmits the transmission signal to a corresponding destination via one or more antennas.

Next, reception processing of the base station 130 will be described. The station-side communication unit 131 receives a radio signal from a transmission source as a reception signal via the one or more antennas, and generates control data or user data from the reception signal. The station-side communication unit 131 then transmits the control data to the protocol processing unit 136, the 5GC communication unit 133, the EPC communication unit 134, or the other-base-station communication unit 135, and transmits the user data to the 5GC communication unit 133, the EPC communication unit 134, or the other-base-station communication unit 135.

The series of processing by the base station 130 as described above are controlled by the control unit 137. Although not illustrated, the control unit 137 is connected to the station-side communication unit 131, the communication processing unit 132, and the protocol processing unit 136. Note that the number of antennas used by the base station 130 for transmission and the number of antennas used by the base station 130 for reception may be the same or different from each other. The number of antennas of the UE 110 and the number of antennas of the base station 130 may be the same or different from each other.

The storage unit 138 stores a program and data necessary for processing by the base station 130.

One or some of or all of the communication processing unit 132, the protocol processing unit 136, and the control unit 137 described above can each be configured of the memory 10 and the processor 11, such as a CPU, configured to execute a program stored in the memory 10, as illustrated in Fig. 3A, for example. Such a program may be provided via a network or may be provided by being recorded on a recording medium. In other words, such a program may be provided as a program product, for example.

One or some of or all of the communication processing unit 132, the protocol processing unit 136, and the control unit 137 can each be configured of the processing circuitry 12 such as a single circuit, a combined circuit, a processor configured to operate according to a program, a parallel processor configured to operate according to a program, an ASIC, or an FPGA, as illustrated in Fig. 3B, for example. As described above, the communication processing unit 132, the protocol processing unit 136, and the control unit 137 can each be implemented by a processing circuit network.

Note that the station-side communication unit 131 can be implemented by a radio communication interface, which is an interface for radio communication. The storage unit 126 can be implemented by a non-volatile memory or a storage device such as a hard disk drive (HDD), or a solid state drive (SSD).

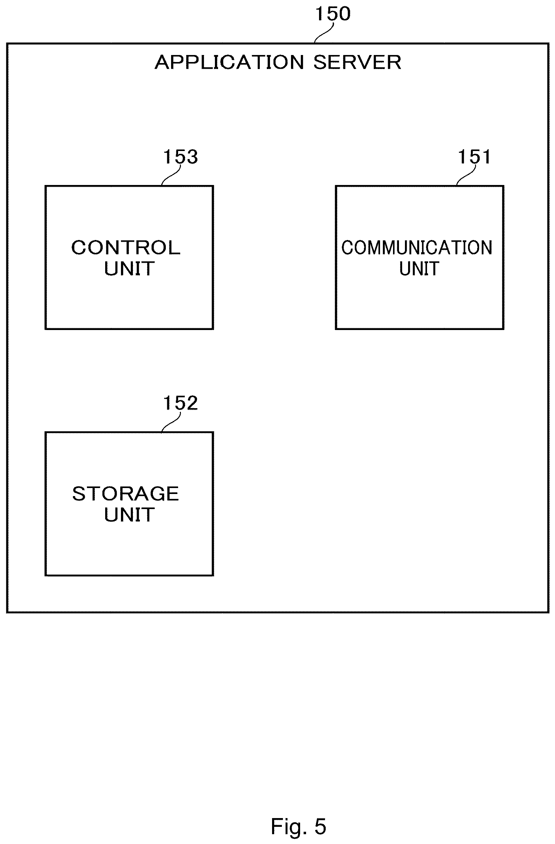

Fig. 5 is a block diagram illustrating a schematic configuration of the application server 150. The application server 150 includes a communication unit 151, a storage unit 152, and a control unit 153.

The communication unit 151 performs transmission and reception of data between the application server 150 and the base station 130.

The storage unit 152 stores a program and data necessary for processing by the application server 150. For example, the storage unit 152 stores a model for machine learning.

The series of processing of the application server 150 are controlled by the control unit 153. Although not illustrated, the control unit 153 is connected to the communication unit 151 and the storage unit 152.

The control unit 153 can partially or entirely be configured of the memory 10 and the processor 11, such as a CPU, configured to execute a program stored in the memory 10, as illustrated in Fig. 3A, for example. Such a program may be provided via a network or may be provided by being recorded on a recording medium. In other words, such a program may be provided as a program product, for example.

The control unit 153 can partially or entirely be configured of the processing circuitry 12 such as a single circuit, a combined circuit, a processor configured to operate according to a program, a parallel processor configured to operate according to a program, an ASIC, or an FPGA, as illustrated in Fig. 3B, for example. As described above, the control unit 153 can be implemented by a processing circuitry network.

The communication unit 151 can be implemented by a communication interface (I/F) such as a network interface card (NIC). The storage unit 152 can be implemented by a non-volatile memory or a storage device such as an HDD, or an SSD.

As described above, the radio communication system 100 includes the UEs 110, which are a plurality of terminals, the base station 130 configured to perform radio communication with the first UE 110A and the second UE 110B, which are at least one volunteer terminal included in the plurality of terminals, and the application server 150, which is a server configured to perform communication with the base station 130. Communication between the application server 150 and the base station 130 may be wireless or wired.

At least one of the first UE 110A and the second UE 110B, which are volunteer terminals, acquires a model for machine leaning from the application server 150 via the base station 130, and notifies other UEs 110 excluding the UE itself of the model.

In response to such notification, each UE 110 that has received the notification uses inter-terminal direct communication through sidelink communication to construct a peer-to-peer (P2P) network. The plurality of UEs 110 share the model via the P2P network. Note that the inter-terminal direct communication may use a unicast scheme or a groupcast scheme, for example.

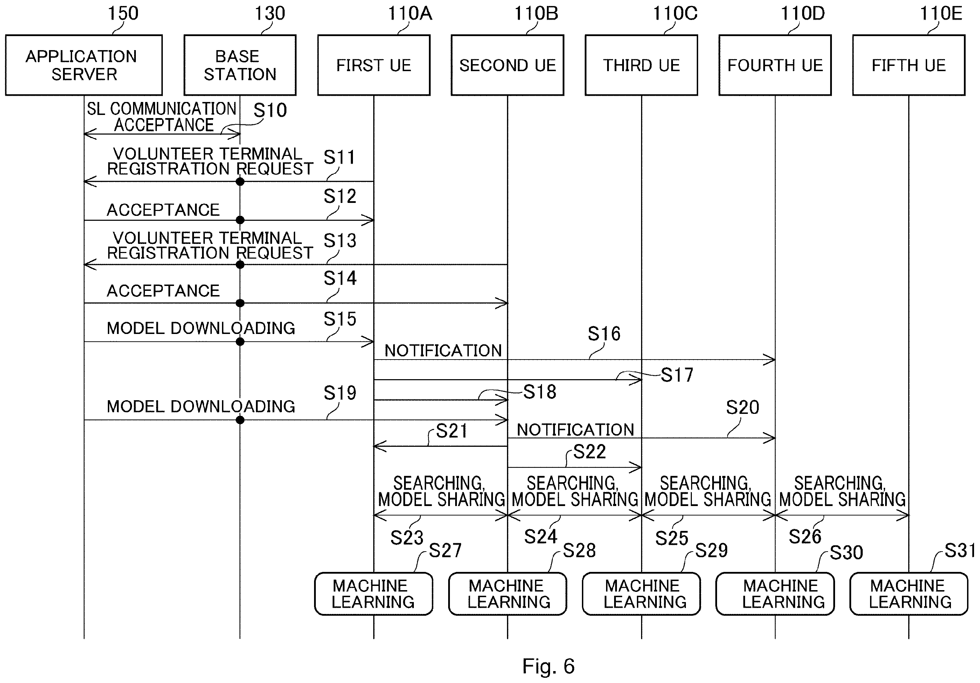

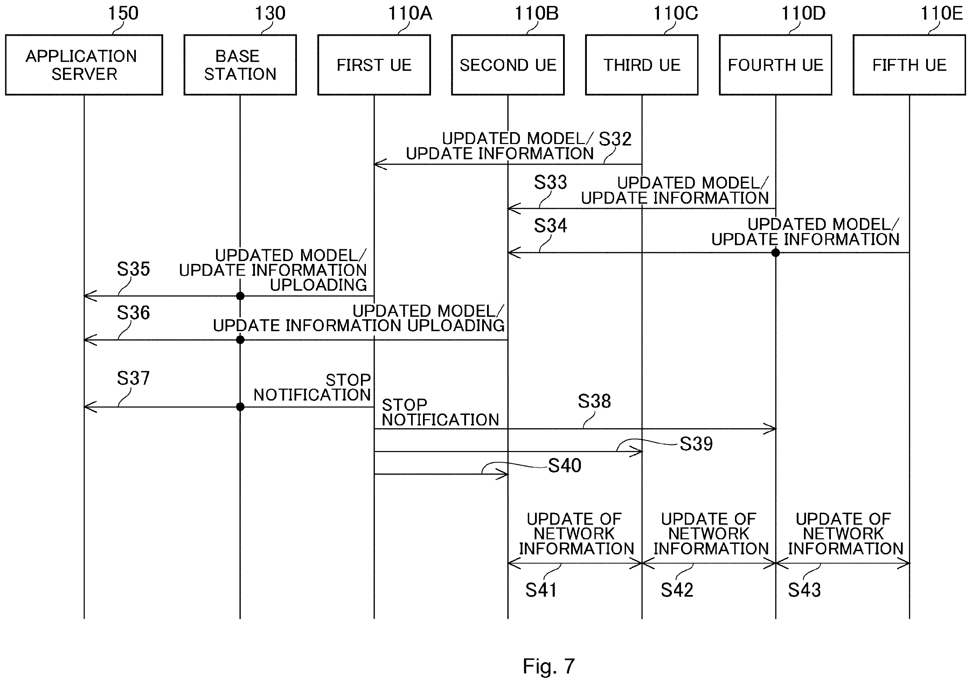

Figs. 6 and 7 are sequence diagrams illustrating a model downloading and uploading procedure. First, the control unit 153 of the application server 150 inquires of the base station 130 whether or not sidelink communication is possible in a desired area, via the communication unit 151, and checks whether or not downloading and uploading of data via a volunteer terminal is possible (S10). Specifically, the control unit 153 of the application server 150 inquires the above of the base station 130 via a function called a network exposure function (NEF). Here, assume that the protocol processing unit 136 of the base station 130 holds a parameter indicating whether or not sidelink communication is possible. Here, assume that the protocol processing unit 136 of the base station 130 replies that sidelink communication is possible. Note that it is assumed that, when sidelink communication can be performed, downloading and uploading of data via a volunteer terminal is possible.

The AP unit 112 of the first UE 110A, which is a terminal possible to be a volunteer terminal, transmits a request for registration of a volunteer terminal to the application server 150 via the base station 130 (S11). Here, when the AP unit 112 starts an AI/ML application, which is an application for performing machine learning, or when a user of the UE 110 turns on a volunteer terminal function of the UE 110, the UE 110 judges whether or not to transmit the request for registration of a volunteer terminal. For example, when the UE 110 has a function of sidelink communication, the AP unit 112 of the UE 110 judges whether or not to transmit the request for registration of a volunteer terminal in consideration of at least one of capability of an application processor of the UE 110, communication capability between the base station 130 and the UE 110 (for example, a UE Category value), a load state of the application processor, the remaining battery level, and user indication.

The control unit 153 of the application server 150 judges whether or not to accept the request for registration of a volunteer, and notifies the first UE 110A, which has transmitted the request for registration of a volunteer, of the result of the judgment via the communication unit 151 (S12). As a reference for the judgment, location information indicating the location of the UE 110 that has transmitted the request and information about the number of UEs 110 using the AI/ML application around the UE 110 and the like may be used. Specifically, the control unit 153 judges whether the number of UEs 110 using the AI/ML application around the UE 110 that has transmitted the request for registration of a volunteer terminal is large or small. This judgment may use a predetermined threshold. For example, when the number of UEs 110 using the AI/ML application, which are present within a predetermined range from the UE 110 that has requested registration of a volunteer terminal, is equal to or larger than a predetermined value, the control unit 153 may judge that a large number of UEs 110 using the AI/ML application are present around the UE 110 that has transmitted the request for registration of a volunteer terminal.

When a large number of such UEs 110 are present, the control unit 153 accepts the registration of a volunteer terminal because providing a volunteer terminal is advantageous. Note that, when a small number of such UEs 110 are present nearby, or when a sufficient number of UEs 110 being already volunteer terminals are present nearby, the control unit 153 may judge not to accept the registration. This judgment may also use a threshold. Here, assume that registration of a volunteer terminal is approved for the first UE 110A.

The AP unit 112 of the second UE 110B, which is a terminal possible to be a volunteer terminal, also transmits a request for registration of a volunteer terminal to the application server 150 via the base station 130 (S13).

The control unit 153 of the application server 150 judges whether or not to accept the request for registration of a volunteer, and notifies the second UE 110B, which has transmitted the request for registration of a volunteer, of the result of the judgment via the communication unit 151 (S14). Here, assume that registration of a volunteer terminal is approved for the second UE 110B.

The AP unit 112 of the first UE 110A, which is registered as a volunteer, downloads a model from the application server 150 via the terminal-side communication unit 111 (S15). The downloaded model is stored in the storage unit 115.

The AP unit 112 of the first UE 110A then notifies the fourth UE 110D, the third UE 110C, and the second UE 110B, which are nearby terminals, that the first UE 110A holds the model, by using sidelink communication (S16, S17, S18).

The AP unit 112 of the second UE 110B, which is registered as a volunteer, also downloads a model from the application server 150 via the terminal-side communication unit 111 (S19). The downloaded model is stored in the storage unit 115.

The AP unit 112 of the second UE 110B then notifies the fourth UE 110D, the first UE 110A, and the third UE 110C, which are nearby terminals, that the second UE 110B holds the model, by using sidelink communication (S20, S21, S22).

In response to the notification by the volunteer terminal, the AP unit 112 of each of the first UE 110A, the second UE 110B, the third UE 110C, and the fourth UE 110D searches for a UE 110 using the same application nearby, via the terminal-side communication unit 111, acquires the downloaded model from another UE 110, and notifies such another UE 110 that the UE 110 itself has the model, to thereby construct a P2P network (S23, S24, S25, S26). Specifically, the AP unit 112 of the first UE 110A, the second UE 110B, the third UE 110C, and the fourth UE 110D refers to a "Group" parameter in a Discovery message transmitted at the first searching of a nearby terminal in the procedure of sidelink communication, to thereby identify the UE 110 to be a candidate. The AP unit 112 then identifies the UE 110 to communicate with, based on the "Group" parameter, actually establishes sidelink communication with the identified UE 110, thereafter performs communication in the application layer, and judges whether or not to actually construct a P2P network. Here, assume that the AP unit 112 judges to construct a P2P network. By the P2P network, the fifth UE 110E, which is located outside the communication range of the sidelink communication from the first UE 110A and the second UE 110B being volunteer terminals, can also perform data transfer and hence acquire the model.

In the processing from steps S23 to S26, each UE 110 may acquire the model from such another UE 110 in a unicast manner. The first UE 110A or the second UE 110B, which is a volunteer terminal, may perform data transmission to the plurality of UEs 110 all together in a push communication scheme by using groupcast of the sidelink communication. Each of the UEs 110 including the volunteer terminals may notify another UE(s) 110 of time stamp information of the model for old and new comparison between the model that the UE 110 has and the model that such another UE(s) 110 has.

Each UE 110 can directly download the model from the application server 150 on the base station 130 side, without involving the first UE 110A or the second UE 110B, which is a volunteer terminal. Further, the application server 150 may notify such UE 110 of a volunteer terminal present nearby, to encourage communication with the volunteer terminal.

Upon acquisition of the model, the AP unit 112 of each UE 110 performs machine learning on the model and updates the model (S27, S28, S29, S30, S31). The sequence then proceeds to Fig. 7.

The AP unit 112 of each of the third UE 110C, the fourth UE 110D, and the fifth UE 110E being a terminal other than the volunteer terminals and present in the range of the sidelink communication of the volunteer terminals transmits the updated model or model update information indicating data of an updated part of the model (for example, a weight value) to any one of the first UE 110A and the second UE 110B, which are volunteer terminals, via the terminal-side communication unit 111 (S32, S33). Here, the destination of the transmission may be selected arbitrarily from the first UE 110A and the second UE 110B.

The AP unit 112 of the fifth UE 110E being present outside the range of sidelink communication of the volunteer terminals may transmit the updated model or the model update information directly to the application server 150 on the base station 130 side via the terminal-side communication unit 111. Here, assume that the AP unit 112 of the fifth UE 110E discovers a relay terminal possible to perform relay to a volunteer terminal in accordance with a Relay Discovery procedure of the sidelink communication via the terminal-side communication unit 111, and transmits the updated model or the model update information to the second UE 110B, which is a volunteer terminal, via the relay terminal (S34). Here, although it is assumed that the fourth UE 110D is discovered as a relay terminal, the third UE 110C may be discovered.

The AP unit 112 of the first UE 110A, which is a volunteer terminal, transmits the model updated by the first UE 110A itself or the model update information and the received updated model or the received model update information, to the application server 150 via the terminal-side communication unit 111 (S35).

The AP unit 112 of the second UE 110B, which is a volunteer terminal, also transmits the model updated by the second UE 110B itself or the model update information and the received updated model or the received model update information, to the application server 150 via the terminal-side communication unit 111 (S36). Through the above, the control unit 153 of the application server 150 can acquire learned contents by each UE 110.

Before when the volunteer terminal has a low remaining battery level, when the volunteer terminal closes the application, when the volunteer terminal stops the terminal function itself, or the like, the volunteer terminal notifies the application server 150 that the volunteer terminal is no longer available. Here, a case where the first UE 110A, which is a volunteer terminal, is stopped will be described.

The AP unit 112 of the first UE 110A transmits stop notification indicating the first UE 110A to be stopped, to the application server 150 via the terminal-side communication unit 111 (S37). In this case, the control unit 153 of the application server 150 may request a UE 110 present nearby to be a new volunteer terminal, via the communication unit 151.

At the same time as step S37, the AP unit 112 of the first UE 110A transmits stop notification to other UEs 110 via the terminal-side communication unit 111 in a groupcast or unicast manner (S38, S39, S40).

The AP unit 112 of each of the second UE 110B, the third UE 110C, and the fourth UE 110D, which are terminals other than the first UE 110A, identifies a new volunteer terminal to perform communication and updates the P2P network information, as preparation for uploading (S41, S42, S43). For example, in steps S23 to S26, when each UE 110 has recognized a plurality of volunteer terminals nearby, the UE 110 only needs to switch a communication destination to another volunteer terminal that is not stopped. Here, assume that the second UE 110B is identified as a volunteer terminal. Note that, in steps S23 to S26, when a plurality of volunteer terminals are not discovered, each UE 110 only needs to perform processing similar to steps S23 to S26 to thereby discover another volunteer terminal. Here, when no other volunteer terminal is discovered, the AP unit 112 of each UE 110 may transmit the updated model or the model update information directly to the application server 150 on the base station 130 side via the terminal-side communication unit 111.

As described above, according to the embodiment, it is possible to reduce load of a volunteer terminal and continue downloading or uploading of data even when a given volunteer terminal is no longer available.

In the embodiment described above, upon acquisition of a model, the AP unit 112 of each UE 110 performs machine learning on the model (S27, S28, S29, S30, S31), but the embodiment is not limited to such an example. When the processing capability of the UE 110 is not sufficient in a case where a model is a convolutional neural network (CNN) widely used in image recognition and the like, substitute processing in which the first UE 110A or the second UE 110B, which is a volunteer terminal, performs a part of lower-layer processing by substitution may be performed. In the substitute processing, the volunteer terminal performs part of machine learning processing instead of another UE 110. For example, a volunteer terminal may perform processing of one or a plurality of hidden layers preceding to an output layer instead of another UE in the CNN. In this case, the UE 110 may transmit intermediate data, which is a processing result of a higher hidden layer, to the volunteer terminal. When such a substitute processing is performed, the volunteer terminal may notify such another UE 110 of a message in an application layer indicating whether or not to accept the request of the substitute processing from the plurality of UEs 110 excluding the volunteer terminal.

In the embodiment described above, the first UE 110A or the second UE 110B, which is a volunteer terminal, transmits an updated model or model update information of each of the UEs 110 to the application server 150, but the embodiment is not limited to such an example. For example, the first UE 110A or the second UE 110B, which is a volunteer terminal, may use a federated learning to average model update information of itself and model update information from another UE 110, and transmit model update information obtained as a calculation result by the averaging to the application server 150.

### Alterations.

For each UE 110 to discover a volunteer terminal to relay data and determine to perform communication via the volunteer terminal, it is required to establish inter-UE 110 communication for information exchange in an application layer, which causes delay time. In a case where a model of machine learning is updated in a synchronized manner, update interval is determined, which may cause update to be too late when a volunteer terminal needs to be discovered.

In view of this, to reduce time for discovering a volunteer terminal, the AP unit 112 of each of the first UE 110A and the second UE 110B functioning as volunteer terminals may add a "Proxy" parameter indicating that the UE is a volunteer terminal, for example, to a Discovery message or a Relay Discovery message of sidelink communication being a network protocol.

The AP unit 112 of each of the first UE 110A and the second UE 110B functioning as volunteer terminals appends, to a "Group" parameter in any one of a Discovery Response message, a Relay Discovery Response message, a Discovery Solicitation message, and a Relay Discovery Solicitation message, information for specifying an AI/ML application to be used, sets a Proxy flag to be ON, and transmits the above message. Through the above, the protocol processing unit 113 of another UE 110 that has received a message extracts the parameter in PHY control and notifies the AP unit 112 to execute the AI/ML application of the parameter. With this, such another UE 110 can detect the presence/absence of a nearby volunteer terminal without requiring communication establishment in an actual application layer.

The AP unit 112 of each UE 110 may add a "Revision" parameter to a Discovery message or a Relay Discovery message to notify another UE 110 of a time stamp of a model held by each of the UEs 110 including the volunteer terminals, for example.

In each UE 110, by the "Revision" parameter being extracted in PHY control to notify the AP unit 112 to execute the AI/ML application of the parameter, the AP unit 112 can compare whether the model held by the UE 110 itself is old or new without performing actual communication and judge whether to start communication with the UE 110 to receive a model.

Conceivable is a case where a volunteer terminal cannot receive model update information due to the calculation processing state of the volunteer terminal itself, the amount of model update information transferred from another UE 110 for uploading, or a dynamic state change such as the remaining battery level of the volunteer terminal.

In consideration of such a case, for example, the AP unit 112 of each of the first UE 110A and the second UE 110B functioning as volunteer terminals may add a parameter called "Capability" or "Relay Capability" indicating application processing capable of relay, to any one of a Discovery Response message, a Relay Discovery Response message, a Discovery Solicitation message, and a Relay Discovery Solicitation message, and add information such as whether downloading is possible or uploading is possible currently or whether substitute processing of a CNN is possible, for notification to another UE 110.

In each UE 110, by extracting the "Capability" or "Relay Capability" in PHY control and notifying the AP unit 112 to execute an AI/ML application of such parameter, the AP unit 112 can judge whether or not transferring of model update information to be uploaded to a volunteer terminal is possible, and select a volunteer terminal to be a transfer destination.

When a volunteer terminal is stopped, for example, the AP unit 112 of the first UE 110A, which is a volunteer terminal, notifies another UE 110 of information indicating that the first UE 110A is no longer available, as illustrated in steps S38 to S40 in Fig. 7. The embodiment is not limited to such an example, and the protocol processing unit 113 may transmit a (Relay) Discovery Response message or a Relay Discovery Response message, or a Relay Discovery Solicitation message or a Relay Discovery Solicitation message, with a "Capability" parameter or a "Relay Capability" parameter being off, instead of being as application layer information, to thereby notify such another UE 110 of this, for example.

In the method above, by judging download processing and upload processing in information in the physical layer (PHY), the number of times of communication in the application layer and return can be reduced, which can prevent an increase in delay time.

As described above, according to the embodiment, it is possible to exert advantageous effects such as preventing an increase in delay time, distributing load of a volunteer terminal by using characteristics of a P2P network, and continuing downloading or uploading of a model even when any one volunteer terminal is no longer available due to a failure or the like.

### Reference Signs List

- 100: Radio Communication System
- 110: UE
- 111: Terminal-side Communication Unit
- 112: AP Unit
- 113: Protocol Processing Unit
- 114: Control Unit
- 115: Storage Unit
- 130: Base Station
- 131: Station-side Communication Unit
- 132: Communication Processing Unit
- 136: Protocol Processing Unit
- 137: Control Unit
- 138: Storage Unit
- 150: Application Server
- 151: Base Station Communication Unit
- 152: Storage Unit
- 153: Control Unit

## Claims

1. A radio communication system comprising:
a plurality of terminals;
a base station configured to perform radio communication with at least one volunteer terminal included in the plurality of terminals; and
a server configured to perform communication with the base station, wherein
the at least one volunteer terminal is configured to acquire a model to be used for machine learning from the server via the base station, and notify the plurality of terminals excluding the at least one volunteer terminal of the model, and
the plurality of terminals are configured to construct a peer-to-peer network in response to the notification by using inter-terminal direct communication through sidelink communication to share the model via the peer-to-peer network.

2. The radio communication system according to claim 1, wherein the inter-terminal direct communication uses a unicast scheme or a groupcast scheme.

3. The radio communication system according to claim 1 or 2, wherein the at least one volunteer terminal is configured to
add a parameter indicating being the at least one volunteer terminal to a Discovery message or a Relay Discovery Response message of the sidelink communication, and
perform the notification.

4. The radio communication system according to claim 1 or 2, wherein the at least one volunteer terminal is configured to
append information for specifying an application to be used for the machine learning to a Group parameter in any one of a Discovery Response message, a Relay Discovery Response message, a Discovery Solicitation message, and a Relay Discovery Solicitation message,
set a Proxy flag, which indicates being the at least one volunteer terminal configured to relay transfer of the model for the machine learning, to be on, and
perform the notification.

5. The radio communication system according to any one of claims 1 to 4, wherein
one terminal included in the plurality of terminals is configured to transmit a request for registration of the at least one volunteer terminal to the server, and
the server is configured to register the one terminal as the at least one volunteer terminal when a number of terminals, which are present around the one terminal and use an application for performing the machine learning, is larger than a predetermined threshold.

6. The radio communication system according to any one of claims 1 to 5, wherein
the plurality of terminals are configured to perform the machine learning on the model to update the model,
the plurality of terminals excluding the at least one volunteer terminal are configured to transmit the model updated or model update information indicating data corresponding to an updated part of the model, to the at least one volunteer terminal, and
the at least one volunteer terminal is configured to transmit the model updated or the model update information from the plurality of terminals excluding the at least one volunteer terminal and the model updated or the model update information of the at least one volunteer terminal, to the server via the base station.

7. The radio communication system according to any one of claims 1 to 5, wherein
the plurality of terminals are configured to perform machine learning based on federated learning on the model,
the plurality of terminals excluding the at least one volunteer terminal are configured to transmit model update information indicating data corresponding to an updated part of the model to the at least one volunteer terminal, and
the at least one volunteer terminal is configured to
average the model update information indicating data corresponding to an updated part of the model by the at least one volunteer terminal and the model update information from the plurality of terminals excluding the at least one volunteer terminal, and
transmit a calculation result obtained by the averaging to the server via the base station.

8. The radio communication system according to any one of claims 1 to 7, wherein the at least one volunteer terminal is configured to perform substitute processing for performing a part of processing of the machine learning instead of the plurality of terminals excluding the at least one volunteer terminal, when the model is a convolutional neural network.

9. The radio communication system according to claim 8, wherein the at least one volunteer terminal is configured to
append a parameter indicating whether or not to accept a request of the substitute processing from the plurality of terminals excluding the at least one volunteer terminal, to a Discovery Solicitation message or a Discovery Response message, and
notify the plurality of terminals excluding the at least one volunteer terminal of the Discovery Solicitation message or Discovery Response message.
